# EUROPÄISCHE PATENTSCHRIFT

(11) **EP 0 909 977 B1**
(45) Veröffentlichungstag und Bekanntmachung des Hinweises auf die Patenterteilung: **13.02.2002**
(21) Anmeldenummer: 98117310.7
(22) Anmeldetag: 12.09.1998
(51) Int. Cl.: G03B 27/72, H04N 1/405

(54) **Verfahren und Vorrichtung zum Kopieren einer transparenten Vorlage auf lichtempfindliches Material**
Method and apparatus for copying a transparent original onto light-sensitive material
Procédé et appareil pour copier un original transparent sur un matériau sensible à la lumière

(30) Priorität: 15.10.1997 DE 19745498
(43) Veröffentlichungstag der Anmeldung: 21.04.1999
(73) Patentinhaber: Agfa-Gevaert AG, 51373 Leverkusen (DE)
(72) Erfinder: Delabastita, Paul A., 2650 Edegem (BE); Findeis, Günter, 82054 Sauerlach (DE); Fürsich, Manfred, Dr., 82024 Taufkirchen (DE); Moseler, Josef, 87640 Biessenhofen (DE)

(56) Entgegenhaltungen:
- EP-A- 0 571 010
- DE-A- 2 820 965
- US-A- 4 350 996
- Proceedings of the International Conference on Image Processing, Lausanne, 16-19 September 1996, IEEE, 1996, Vol.1, pages 545-548 T. ASANO : "Digital halftoning algorithm based on random space-filling curve" XP000780686
- I. H. WITTEN ET AL.: "Using Peano Curves for Bilevel Display of Continuous-Tone Images" IEEE COMPUTER GRAPHICS AND APPLICATIONS, Mai 1982, Seiten 47-52, XP002094110 New York (US)

## Beschreibung

Die Erfindung geht aus von einem Verfahren und einer Vorrichtung zum Kopieren einer transparenten Vorlage auf lichtempfindliches Material nach dem Oberbegriff von Anspruch 1 bzw. Anspruch 8.

Bei fotografischen Aufnahmen, die in einzelnen Bereichen große Helligkeitsunterschiede beinhalten, sind oftmals die erstellten Kopien in den hellen Bereichen überbelichtet oder aber in den dunkleren Bereichen unterbelichtet. Dadurch werden Einzelheiten oder feinere Strukturen auf dem Papierbild sehr schlecht oder gar nicht mehr erkennbar wiedergegeben.

In der DE PS 28 20 965 ist eine Kopiervorrichtung beschrieben, bei der die Beleuchtungseinrichtung für den fotografischen Film durch eine Lichtquelle und ein Liquid Cristal Display (LCD) gebildet wird. Über eine elektrische Ansteuerung wird auf diesem Display eine Schwarzweiß-Negativmaske des Originals erzeugt. Wird nun die Papierbelichtung durch diese Maske und das Original durchgeführt, so ergibt sich dadurch eine erwünschte Dichtekompression.

Um eine entsprechende Schwarzweiß-Maske erzeugen zu können, müssen mit dem LCD auch Grauwerte darstellbar sein. Wird ein LCD mit einem ferroelektrischen Flüssigkristall verwendet, so müssen die darzustellenden Grauwerte aufgerastert werden, da die Einzelpunkte eines solchen LCDs nur hell oder dunkel schaltbar sind. In der DE PS 43 08 864 wird deshalb eine Unterteilung des LCD in feste Bereiche vorgeschlagen. Diese Bereiche, die als Makropixel bezeichnet werden können, sind in sechs einzeln ansteuerbare Pixel aufgeteilt, deren Flächen sich wie 1:2:4:8:16:32 verhalten. Durch unterschiedliche Kombinationen bei der Ansteuerung dieser Pixel lassen sich so Makropixel in 64 Helligkeitsstufen erzeugen.

Es hat sich herausgestellt, daß mit einer so erzeugten Maske fotografische Aufnahmen mit vielen feingezeichneten Details ausgezeichnet kopiert werden können, ohne daß beispielsweise Moiré-Effekte, also gewisse Schwebungen bei der Wiedergabe feiner Strukturen zu beobachten sind. Beim Kopieren von Bildern mit großen, sehr gleichmäßigen Flächen treten dagegen oftmals in der Kopie Strukturen auf, die in der transparenten Vorlage nicht vorhanden sind.

Es hat sich auch gezeigt, daß an sich scharfe Kanten in der transparenten Vorlage durch das Maskieren so verunschärft werden, daß auf dem Papierbild ungleichmäßige Ausfransungen solcher Kanten zu beobachten sind.

Es war daher die Aufgabe der Erfindung, beispielsweise ein LCD zur Erzeugung einer Maske mit vorgegebener Auflösung so anzusteuern, daß große gleichmäßige Flächen in einer transparenten Vorlage auch in der Kopie gleichmäßig und/oder scharfe Kanten solcher Flächen nicht ausgefranst abgebildet werden.

Gelöst wird die Aufgabe durch ein Verfahren mit den kennzeichnenden Merkmalen von Anspruch 1 und eine Vorrichtung mit den kennzeichnenden Merkmalen von Anspruch 8. Erfindungsgemäß wird ein LCD, das zur Maskierung einer transparenten Vorlage eingesetzt wird, entsprechend eines Rasterbildes so angesteuert, daß die darzustellenden Grauwerte ohne systematische Strukturen erzeugt werden. Systematische Strukturen, wie beispielsweise die immer gleichen Makropixel der oben genannten DE-PS 43 08 864 zur Darstellung der Grauwerte, können bei der Überlagerung mit ebenfalls regelmäßigen Strukturen, wie Kanten in der Kopiervorlage, eine Verunschärfung dieser Kanten in der Kopie verursachen. Um ein Raster ohne systematische Strukturen zu erzeugen, wird ein Ausgangsbild aus den Dichtewerten der gescannten Vorlage mit vorbestimmter Orts- und Graustufenauflösung von einem Rechner ermittelt. Dieses Ausgangsbild wird nach dem Fehlerdiffusionsverfahren gerastert. Dazu wird durch das Ausgangsbild ein Weg gelegt, der alle aufgelösten Punkte erfaßt. Der Dichtewert des ersten Punktes auf diesem Weg wird nun mit einem Schwellwert verglichen und abhängig von diesem Vergleich entweder auf hell oder dunkel gesetzt. Der Fehler, der sich dadurch ergibt, wird auf den zweiten Punkt des Weges aufaddiert. Dieser neue Wert wird dann wiederum mit dem Schwellwert verglichen und entsprechend auf hell oder dunkel gesetzt. Der entsprechende Fehler wird wiederum auf den nächsten Punkt aufaddiert, so daß bei diesem Rasterverfahren jeweils ein Fehler von Punkt zu Punkt weitergegeben wird und sich somit eine Fehlerdiffusion durch die Berechnung des gesamten Rasterbildes zieht. Der sogenannte Rasterschwellwert, mit dem jeder Dichtewert des Bildes verglichen wird, kann variabel sein. Es hat sich herausgestellt, daß gute Ergebnisse erzielt werden, wenn der Rasterschwellwert bildspezifisch gewählt wird und auf die maximale Dichte des Bildes festgesetzt wird. Wenn alle Rasterpunkte entsprechend berechnet wurden, ergibt sich ein Rasterbild mit der gleichen Ortsauflösung wie das Ausgangsbild.

Der einfachste Weg, der durch ein Ausgangsbild gelegt werden kann, ergibt sich, wenn die einzelnen Punkte des Ausgangsbildes zeilenweise abgearbeitet werden. Auch hier ist durch die Fehlerdiffusion bereits eine deutliche Reduzierung systematischer Strukturen zu erkennen. Es sind jedoch auch festgelegte Wege ermittelt worden, die diese systematischen Strukturen noch wesentlich weiter auflösen. Generell kann auch ein rein zufälliger Weg gewählt werden, es ist dabei jedoch ein enormer Rechenaufwand notwendig, da bei der Festlegung des Weges unbedingt beachtet werden muß, daß der nächste Punkt auf dem Weg immer in unmittelbarer Nachbarschaft des zuletzt berechneten liegt und daß auch wirklich alle Punkte des Ausgangsbildes bearbeitet werden. Es läßt sich jedoch auch ein genügend chaotischer Weg festlegen, der für jedes Bild gleichbleibt und somit einen relativ geringen Rechenaufwand erfordert. Einer dieser festgelegten Wege ist z. B. die sogenannte Peanokurve (s. "Chaos, Bausteine der Ordnung", Peitgen/Jürgens/Saupe, 1994, Springer Verlag), eine Variante eines selbstmeidenden, flächenfüllenden Weges. Als besonders wirkungsvoll hat sich eine andere Variante dieser Wege, nämlich der Hilbertweg herausgestellt, der nach einem einfachen Algorithmus zu rechnen ist, da bestimmte Schritte der Festlegung des Weges sich immer wiederholen.

Um das Rastem des Abbildes zu beschleunigen, kann der festgelegte Weg in einer LUT (Look-Up-Table) abgelegt werden. Dadurch wird den einzelnen Punkten nur noch eine Reihenfolge zugeordnet, und die Berechnung des jeweils nächsten Punktes während des Rasterns entfällt. Die Vorteile einer LUT gelten für alle festgelegten Wege.

Das hochauflösende Scannen der Vorlage zur Erzeugung des Ausgangsbildes ist sehr zeitaufwendig. Es ist deshalb vorteilhaft, die Vorlage in einer festgelegten Auflösung zu scannen, die geringer gewählt wird als die angestrebte Auflösung der Maske. Diese niedrige Auflösung muß dann in einem Zwischenschritt entsprechend erhöht werden. Dies kann dadurch realisiert werden, daß jeder gescannte Dichtewert mehrfach abgespeichert wird. Vorteilhafter ist es jedoch, die Erhöhung der Auflösung dadurch zu realisieren, daß der Speicheradresse eines jeden Dichtewertes immer eine festgelegte Anzahl von Adressen im Rasterbild zugeordnet wird. Soll die Auflösung vervierfacht werden, müssen beispielsweise einer Adresse im Dichtewertespeicher, in dem die Dichtewerte des zu rasternden gescannten Bildes geringerer Auflösung abgelegt sind, immer sechzehn Adressen im Rasterspeicher zugeordnet werden.

Beim Sprung an jede dieser sechzehn Adressen wird dann derselbe Dichtewert ausgelesen. Aus diesem einen Dichtewert ergeben sich jedoch entsprechend der Fehlerdiffusion unterschiedliche Rasterpunkte.

Im folgenden werden anhand der Figuren die Vorteile der Erfindung näher beschrieben.

Es zeigen:
- Fig. 1: den schematischen Aufbau eines erfindungsgemäßen Kopiergeräts,
- Fig. 2: ein Ablaufdiagramm zur Erstellung des Rasters,
- Fig. 3: eine Hilbert-Kurve,
- Fig. 4: eine zufallsverteilte Hilbert-Kurve und
- Fig. 5: Beispiele für Masken, erstellt nach unterschiedlichen Rasterverfahren.

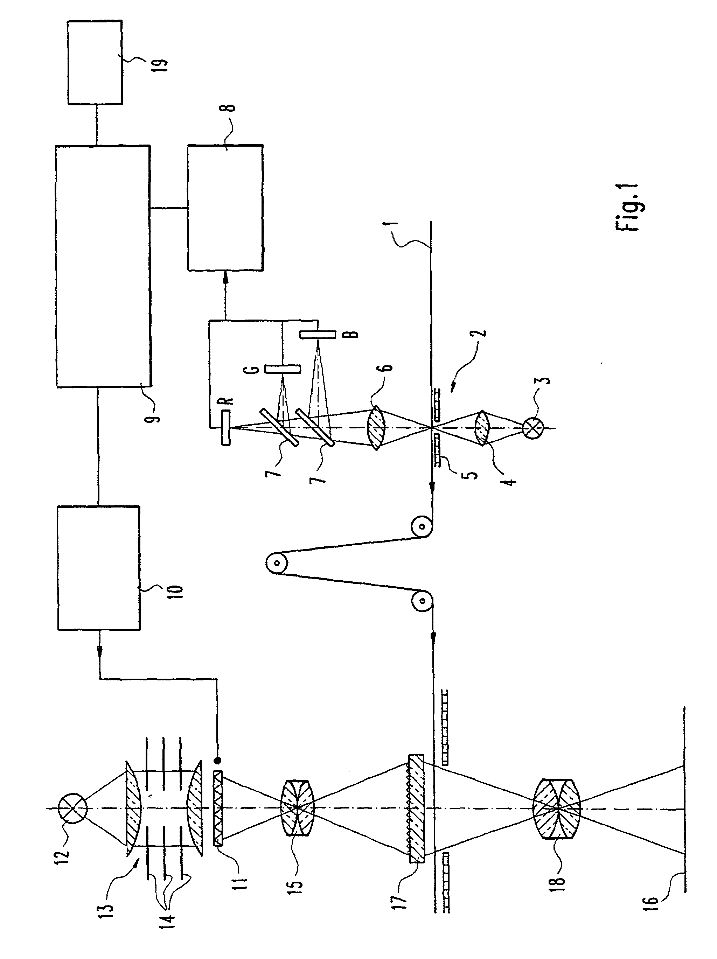

In Fig. 1 wird eine transparente Vorlage 1 durch eine Scanstation 2 geführt. Hier wird das Bild punktweise über die Lichtquelle 3, die Linse 4 und die Spaitblende 5 abgetastet. Der durch den Film getretene Lichtstrahl wird durch die Linse 6 wieder gebündelt und durch Strahlteiler 7 in seine Farbanteile zerlegt. Am Rechner 8 werden daraus Dichtewerte für eine Maske ermittelt, die an die Rasterhardware 9 übertragen werden. Dort werden die Dichtewerte in ein inverses Rasterbild umgewandelt, welches nach dem Fehlerdiffusionsverfahren ermittelt wird. Die Auswahl des jeweils nächsten zu rasternden Punktes erfolgt dabei entlang des Hilbertweges, der in einer LUT 19 vorgegeben wird. Entsprechend dem so erzeugten Rasterbild werden über die Steuerung 10 einzelne Punkte des Lichtwandlers 11 zur Generierung der Maske angesteuert. Als Lichtwandler eignen sich - wie in Fig. 1 angedeutet - beispielsweise alle digitalen Lichtventile, also Flüssigkristalle wie FLCDs oder Keramiken wie PLZTs, die mittels einer Lichtquelle 12 über einen Kondensor 13 mit einer Farbfilteranordnung 14 durchstrahlt werden. Ebenso können LEDs vorgesehen sein, die die Lichtquelle überflüssig machen. Weiterhin sind eine Streuscheibe 17 und eine zweite Linsenanordnung 18 vor dem Papier in dem Strahlengang vorgesehen.

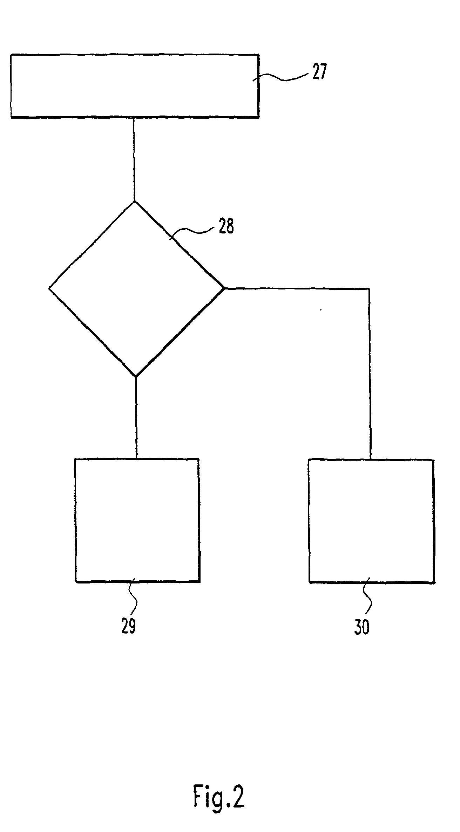

Fig. 2 zeigt ein Flußdiagramm zur Darstellung des Alblaufes der Rasterung des Ausgangsbildes. Die numerische Größe des Dichtewerts eines Punktes auf dem Weg, der aus dem Dichtewertspeicher entnommen wird, wird mit dem Fehler der Quantisierung des vorherigen Punktes im Schritt 27 zu einem Ergebnis addiert. Im Entscheidungsschritt 28 wird das Ergebnis mit einem Rasterschwellwert verglichen. Liegt das Ergebnis oberhalb des Rasterschwellwertes, so wird der entsprechender Rasterpunkt im Schritt 29 auf 1 gesetzt. Hieraus ergibt sich wiederum ein Fehler, der bei der Quantisierung des nächsten Punktes im Schritt 27 entsprechend berücksichtigt wird. Liegt das Ergebnis aus Schritt 27 unterhalb des Rasterschwellwertes, so wird der entsprechende Rasterpunkt im Schritt 30 mit 0 belegt. Auch hier wird der daraus resultierende Fehler bei der Quantisierung des nächsten Punktes im Schritt 27 berücksichtigt.

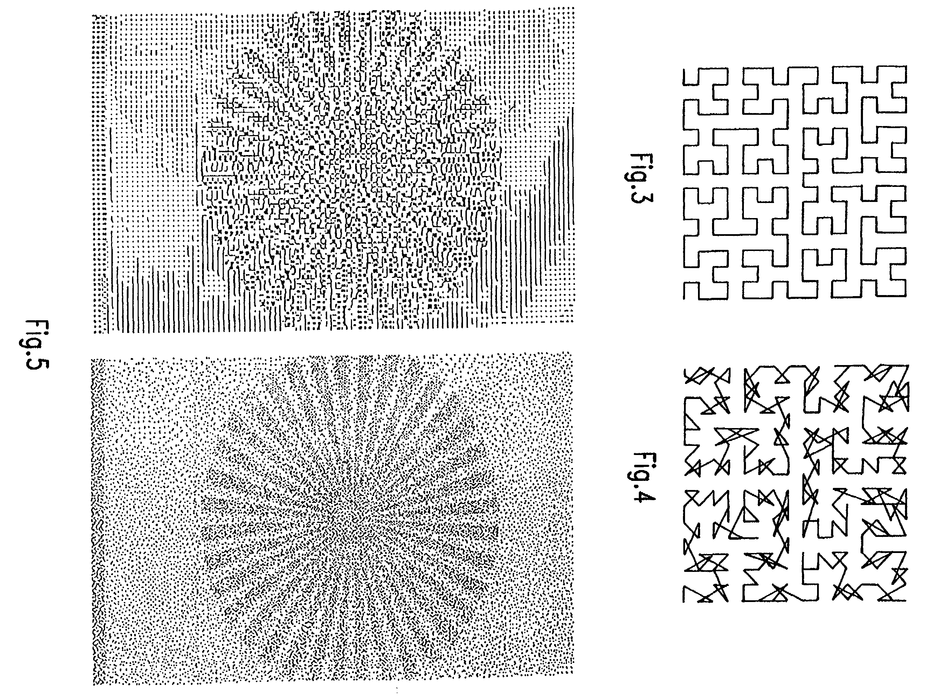

Fig. 3 zeigt einen Hilbert-Weg durch ein Raster mit 16 x 16 Punkten.

In Fig. 4 ist dargestellt, wie dieser Weg modifiziert werden kann. Hierfür wird an jedem Punkt des Weges zufällig entschieden, in welcher Reihenfolge die nächsten beiden Punkte des Hilbert-Weges abgearbeitet werden.

Fig. 5 zeigt Beispiele für eine auf unterschiedliche Weise gerasterte Maske. Für die links dargestellte Maske wurde die Vorlage nach dem in der DE 43 08 864 C2 vorgeschlagenen Verfahren gerastert. Es zeigt sich, daß die scharfen Kanten einer Vorlage in der Maske verunschärft sind, so daß auf einer so maskierten Kopie der Vorlage Ausfransungen an den Kanten zu erwarten sind. Dagegen weist die Maske auf der rechten Seite, die mittels des erfindungsgemäßen Verfahrens gerastert wurde, scharfe Kanten auf, die auch auf der maskierten Kopie scharf wiedergegeben werden.

## Patentansprüche

1. Verfahren zum Kopieren einer transparenten Vorlage auf lichtempfindliches Material, wobei zur Beleuchtung der Vorlage eine Beleuchtungseinrichtung vorgesehen ist, die eine Vielzahl von einzeln ansteuerbaren, auf hell oder dunkel schaltbaren Punkten aufweist, **dadurch gekennzeichnet, daß** die Dichtewerte der Vorlage mit vorbestimmter Orts- und Graustufenauflösung ermittelt werden, aus diesen ein zur Vorlage inverses Rasterbild als Maske erzeugt wird und die einzelnen Punkte der Beleuchtungseinrichtung entsprechend dem Rasterbild angesteuert werden, wobei das Rasterbild nach dem Fehlerdiffusionsverfahren erzeugt wird.

2. Verfahren nach Anspruch 1, **dadurch gekennzeichnet, daß** die Ermittlung der Rasterpunkte auf einem festgelegten Weg vorgenommen wird.

3. Verfahren nach Anspruch 2, **dadurch gekennzeichnet, daß** die Ermittlung der Rasterpunkte auf einem selbstmeidenden flächenfüllenden Weg vorgenommen wird.

4. Verfahren nach Anspruch 3, **dadurch gekennzeichnet, daß** die Ermittlung der Rasterpunkte auf dem Hilbert-Weg vorgenommen wird.

5. Verfahren nach Anspruch 4, **dadurch gekennzeichnet, daß** die Ermittlung der Rasterpunkte auf einem zufallsverteilten Hilbert-Weg vorgenommen wird.

6. Verfahren nach Anspruch 1, **dadurch gekennzeichnet, daß** die mit vorbestimmter Ortsauflösung ermittelten Dichtewerte der Vorlage in ein Ausgangsbild mit höherer Ortsauflösung umgewandelt werden.

7. Verfahren nach Anspruch 6, **dadurch gekennzeichnet, daß** das Rasterbild mit der Ortsauflösung des Ausgangsbildes erzeugt wird.

8. Vorrichtung zum Kopieren einer transparenten Vorlage auf lichtempfindliches Material, mit einer Beleuchtungseinrichtung, die eine Vielzahl von einzeln ansteuerbaren, auf hell oder dunkel schaltbaren Punkten aufweist, mit einer elektronischen Steuerung zum Ansteuern der schaltbaren Punkte und einem Objektiv zum Abbilden der Vorlage auf das lichtempfindliche Material, **dadurch gekennzeichnet, daß** ein Bildspeicher zum Speichern von Dichtewerten der Vorlage mit vorbestimmter Orts- und Graustufenauflösung und eine Recheneinheit vorgesehen sind, wobei die Recheneinheit so aufgebaut ist, daß aus den Dichtewerten des Bildspeichers eine Maske generierbar und mittels einer Rasterhardware ein Rasterbild der Maske nach dem Fehlerdiffusionsverfahren erzeugt wird und **daß** die Steuerung so zwischen Recheneinheit und Beleuchtungseinrichtung geschaltet ist, daß die schaltbaren Punkte entsprechend dem erzeugten Rasterbild ansteuerbar sind.

9. Vorrichtung nach Anspruch 8, **dadurch gekennzeichnet, daß** die Rasterhardware die Ermittlung der Rasterpunkte entlang eines festgelegten Weges vornimmt.

10. Vorrichtung nach Anspruch 9, **dadurch gekennzeichnet, daß** eine LUT vorgesehen ist, in der der festgelegte Weg abgelegt ist.

## Claims

1. Method for copying a transparent document on to light-sensitive material, wherein for illuminating the document an illuminating device is provided which has a multiplicity of dots, which can be individually triggered and switched to light or dark, **characterised in that** the density values of the document are ascertained with predetermined local and gray scale resolution, from these a raster image, inverse to the document, is generated as a mask and the individual dots of the illuminating device are triggered in accordance with the raster image, wherein the raster image is generated according to the error diffusion method.

2. Method according to claim 1, **characterised in that** ascertainment of the raster dots is conducted on a fixed path.

3. Method according to claim 2, **characterised in that** ascertainment of the raster dots is conducted on a self-avoiding, area-filling path.

4. Method according to claim 3, **characterised in that** ascertainment of the raster dots is conducted on the Hilbert path.

5. Method according to claim 4, **characterised in that** ascertainment of the raster dots is conducted on a randomly distributed Hilbert path.

6. Method according to claim 1, **characterised in that** the density values of the document ascertained with predetermined local resolution are converted into an initial image with higher local resolution.

7. Method according to claim 6, **characterised in that** the raster image is generated with the local resolution of the initial image.

8. Device for copying a transparent document on to light-sensitive material, with an illuminating device, which has a multiplicity of dots, which can be individually triggered and switched to light or dark, an electronic control for triggering the switchable dots and a lens for reproducing the document on to the light-sensitive material, **characterised in that** an image memory for storing density values of the document with predetermined local and gray scale resolution and an arithmetic unit are provided, wherein the arithmetic unit is constructed in such a way that from the density values of the image memory a mask can be generated and a raster image of the mask is generated by means of raster hardware according to the error diffusion method and control is switched between arithmetic unit and illuminating device in such a way that the switchable dots can be triggered in accordance with the raster image generated.

9. Device according to claim 8, **characterised in that** the raster hardware conducts ascertainment of the raster dots along a fixed path.

10. Device according to claim 9, **characterised in that** a LUT is provided in which the fixed path is filed.

## Revendications

1. Procédé pour copier un document transparent sur un support photosensible, dans lequel il est prévu, pour éclairer le document, un dispositif d'éclairage présentant une pluralité de points qui peuvent être modifiés en clair ou en foncé et traités individuellement, **caractérisé en ce que** les valeurs de densité du document sont déterminées avec une résolution locale et des gammes de gris prédéfinies, à partir desquelles une image-trame inverse par rapport au document est produite en tant que masque et les points individuels de l'appareil d'éclairage sont traités en fonction de l'image-trame, l'image-trame étant produite suivant le procédé de diffusion d'erreurs,

2. Procédé selon la revendication 1, **caractérisé en ce que** la détermination des points de trame est effectuée sur un parcours défini.

3. Procédé selon la revendication 2, **caractérisé en ce que** la détermination des points de trame est effectuée sur un parcours couvrant la surface et s'auto-évitant.

4. Procédé selon la revendication 3, **caractérisé en ce que** la détermination des points de trame est effectuée sur le parcours Hilbert.

5. Procédé selon la revendication 4, **caractérisé en ce que** la détermination des points de trame est effectuée sur un parcours Hilbert aléatoire.

6. Procédé selon la revendication 1, **caractérisé en ce que** les valeurs de densité du document, déterminées avec la résolution locale prédéfinie, sont converties en une image de sortie dotée d'une résolution locale plus élevée.

7. procédé selon la revendication 6, **caractérisé en ce que** l'image-trame est produite avec la résolution locale de l'image de sortie.

8. Dispositif pour copier un document transparent sur un support photosensible avec un dispositif d'éclairage présentant une pluralité de points commutables en clair ou en foncé pouvant être traités individuellement, avec une commande électronique pour traiter les points commutables et un objectif pour créer une image du document sur le support photosensible, **caractérisé en ce que** sont prévues une unité de calcul et une mémoire image pour enregistrer des valeurs de densité du document avec une résolution locale et des gammes de gris prédéfinies, l'unité de calcul étant conçue de telle manière qu'un masque puisse être produit à partir des valeurs de densité de la mémoire image et qu'une image-trame du masque soit produite à l'aide d'un matériel de tramage, suivant le procédé de diffusion d'erreurs, et **en ce que** la commande est connectée entre l'unité de calcul et le dispositif d'éclairage de manière que les points commutables puissent être traités en fonction de l'image-trame produite.

9. Dispositif selon la revendication 8, **caractérisé en ce que** le matériel de tramage effectue la détermination des points de trame le long d'un parcours déterminé.

10. Dispositif selon la revendication 9, **caractérisé en ce qu'**une table de recherche, dans laquelle est entré le parcours déterminé, est prévue.
